# EUROPÄISCHE PATENTANMELDUNG

(11) **EP 2 298 094 A2**
(43) Veröffentlichungstag der Anmeldung: **23.03.2011**
(21) Anmeldenummer: 10176892.7
(22) Anmeldetag: 15.09.2010
(51) Int. Cl.: A41D 13/05, B29C 51/14

(54) **Schutzsystem für Wirbelsäule, Jacke mit einem solchen Schutzsystem und Verfahren zur Herstellung eines solchen Schutzsystems**

(30) Priorität: 17.09.2009 CH 14412009
(71) Anmelder: Ruepp, Thomas, 4132 Muttenz (CH)
(72) Erfinder: Ruepp, Thomas, 4132 Muttenz (CH)
(74) Vertreter: Braun, André jr.

(57) **Zusammenfassung**

Jacke (1) mit einem flächigen, aus mehreren Schichten gebildeten Schutzsystem (11) als Rückenprotektor zum Schutz der Wirbelsäule. Das Schutzsystem (11) ist wiederentfernbar mit der Jacke (1) verbunden, so dass es beim Tragen stets die richtige Position am Rücken des Reiters inne hat. Bei einem allfälligen Sturz auf den Rücken wird der Aufprall durch die mehreren Schutzschichten des Schutzsystems (11) abgefedert. Die Kräfte werden auf das Schutzsystem, welches als Rückenprotektor dient, über dessen Fläche verteilt, wodurch die Wirbelsäule geschützt wird. Das Schutzsystem weist zudem ein gurtähnliches Element auf, mittels welchem es um die Taille des Reiters herum zusätzlich befestigbar ist.

## Beschreibung

Die Erfindung betrifft ein Schutzsystem zum Schutz der Wirbelsäule gemäss dem Oberbegriff des unabhängigen Patentanspruchs 1 sowie ein Schutzsystem und ein Verfahren zu dessen Herstellung.

### Beschreibung

Schutzsysteme oder Rückenprotektoren dienen der passiven Sicherheit insbesondere der Wirbelsäule u.a. beim Motorrad oder Snowboardfahren und werden üblicherweise über oder unter der Kleidung getragen.

Durch gepolstert gelagerte, oft sich schuppenartig überlappende Einzelelemente aus Kunststoff oder Leder entlang der Wirbelsäule soll das Verletzungsrisiko verringert werden. In qualitativ höherwertiger Motorrad-Schutzkleidung sind oftmals bereits Rückenprotektoren als zähe, elastische Schutzplatten im Bereich des Rückens eingearbeitet oder sind nachrüstbar.

DE 10 2005 061582 A1 offenbart eine Protektorjacke, insbesondere für Motorradfahrer, mit ein dem Körper des Benutzers zugekehrtes Hemd und einen am Rückenbereich des Hemdes befestigten Protektor, wobei der Protektor nur im unteren Bereich mit dem Hemd unverschiebbar verbunden ist und im oberen Bereich flexibel fixiert ist.

Einer der Nachteile der Erfindung besteht darin, dass zwar die vorgenannte Befestigungsweise des Protektors an der Jacke vorgeschlagen wird, ohne jedoch die Beschaffenheit des Protektors näher zu erläutern.

DE 195 27 037 A1 offenbart ein Bekleidungsstück, insbesondere Hemd oder Jacke, mit einem sich entlang der Wirbelsäule erstreckenden Halterungsmittel für Stossschützer aus Kunststoffschaumstoff zum Schutz der Wirbelsäule, wobei das Halterungsmittel den Stossschützer lösbar festlegt.

Einer der Nachteile der Erfindung besteht darin, dass der Stossschützer äusserst schmal, nur die Wirbelsäule abdeckend, ausgebildet ist. Der Stossschützer besteht aus schlagfestem Kunststoffschaum und ist als einstückige Leiste ausgebildet.

DE 20 2007 016030 U1 offenbart eine Damenreitsportjacke mit integrierten Protektoren zum Schutz der Arme und des Rückens, wobei durch den Einsatz von Protektoren die relevanten Sturzzonen optimal gesichert sind. Für den Rücken ist in die Jacke eine aus Polyurethan-Elastofoam bestehende, herausnehmbare Rückenschutzschiene eingesetzt.

Einer der Nachteile der Erfindung besteht darin, dass die aus Zwei-Komponenten-Material gebildete Rückenschutzschiene zwar eine geringe Bauhöhe aufweist, es sich jedoch gezeigt hat, dass Stabilität und Formsteifigkeit der Rückenschutzschiene nicht ausreichend sind.

Im Bereich des Reitsports hat sich jedoch gezeigt, dass die bspw. aus dem Motorradbereich bekannten Rückenprotektoren beim Reiten nicht den nötigen Bewegungsspielraum bzw. Tragkomfort bieten.

Es ist daher eine Aufgabe der vorliegenden Erfindung, ein Schutzsystem für eine Jacke vorzuschlagen, welches die Nachteile des Standes der Technik nicht aufweist. Insbesondere soll eine Jacke vorgeschlagen werden, welche ein einfach positionierbares, wiederentfernbar mit der Jacke verbindbares Schutzsystem zum Schutz der Wirbelsäule aufweist. Eine weitere Aufgabe der Erfindung besteht darin, dass die Jacke mit dem wirksamen Schutzsystem für Kinder und Erwachsene in verschiedenen Konfektionsgrössen realisierbar ist.

Diese Aufgabe wird bei einem Schutzsystem der eingangs definierten Art erfindungsgemäss durch die Merkmale des kennzeichnenden Teils von Anspruch 1 gelöst. Die plattenartige Schutzschicht bezeichnet ein flächiges, aus mehreren Schichten oder Lagen von Materialen gebildete mehrschichtige Platte, Schutzplatte oder Wandung. Vorzugsweise wird als Schichtmaterial hartes Polypropylen (PP) sowie weiches, geschäumtes, elastisches Polyethylen (PE) verwendet. Die schicht- oder lagenweise Kombination der Schichtmaterialien führt zu der gewünschten Schutzwirkung des erfindungsgemässen Rückenprotektors für die Jacke. Jede Schutzschicht besteht vorzugsweise aus Polyethylen oder Polypropylen.

Das Schutzsystem besteht vorzugsweise aus mehreren aus Polyethylen gebildeten Schutzschichten, wobei mindestens zwischen zwei derartigen Schutzschichten eine Schutzschicht aus Polypropylen angeordnet ist, wobei die bzw. jede Schutzschicht aus Polyethylen eine Materialstärke im Bereich von 1 bis 5 mm aufweist und wobei die bzw. jede Schutzschicht aus Polypropylen eine Materialstärke im Bereich von 0.2 bis 1 mm aufweist.

Das Schutzsystem umfasst eine Hülle, wobei die Hülle mindestens teilweise aus feuchtigkeitsabweisendem Polychloropren gebildet ist und wobei die Hülle eine Materialstärke im Bereich von 0.5 bis 5 mm aufweist. Die Hülle des Schutzsystems ist mindestens teilweise aus einem für Feuchtigkeit durchlässigen Netzstoff gebildet und der Netzstoff eine Materialstärke im Bereich von 0.5 bis 5 mm aufweist. Die plattenartigen Schutzschichten sind mindestens an einem Fixationspunkt miteinander fixiert, bspw. durch punktuelle Verklebung, so dass die Schutzschichten zueinander verschiebbar sind. An das Schutzsystem ist ein Gurtsystem angeformt, mittels welchem das Schutzsystem bspw. am Oberkörper der Reiterin befestigbar ist. Mindestens eine der Schutzschichten des Schutzsystems weist eine längliche Ausnehmung aufweist.

Einer der Vorteile der Erfindung besteht darin, dass durch die kompakte Schichtbauweise des Protektors ein flächiges, ergonomisch anpassbares System geschaffen ist, welches mit der Jacke mittels einfachen Verbindungsmitteln, bspw. Druckknöpfen, lösbar verbindbar ist. Durch die genaue Positionierung mittels der an der Jacke und dem Schutzsystem verbundenen Druckknöpfe ist gewährleistet, dass die Wirbelsäule optimal durch das als Protektor wirkende Schutzsystem vor möglichen Verletzungsrisiken bei einem Sturz geschützt ist. Das Schutzsystem kann bspw. in einer dafür an der Jacke inwändig angeformten Tasche entlang des Rückens elegant eingefügt werden, so dass bspw. nur die freien Enden des Gurtsystems ersichtlich sind. Durch die Wiederentfernbarkeit kann die Jacke vom Schutzsystem gelöst und gewaschen werden.

Im Folgenden wird die Erfindung anhand von in den Figuren dargestellten Ausführungsbeispielen näher erläutert. Hierbei gehen aus den Figuren und ihrer Beschreibung weitere wesentliche Merkmale und Vorteile der Erfindung hervor.
Fig. 1 zeigt eine erfindungsgemässe Jacke in einer Vorderansicht, wobei eine strichpunktierte Linie die Schnittlinie IV-IV darstellt;
Fig. 2 zeigt die Jacke in einer Ansicht von hinten bzw. einem leicht seitlich abgedrehten Oberkörper, wobei das mittels eines Gurts im Bereich der Taille und mittels Befestigungsmitteln an der Jacke befestigten Schutzsystems zwischen Jacke und Oberkörper in gestrichelter Linie dargestellt ist;
Fig. 3 zeigt eine vereinfachte Explosionsdarstellung mehrerer Schutzschichten des Schutzsystems der erfindungsgemässen Jacke, wobei rechts unten die Schutzschicht dargestellt ist, welche im befestigten Zustand dem Rücken bzw. Wirbelsäule zugewandt ist;
Fig. 4 zeigt in einer Schnittdarstellung entlang der Schnittlinie IV-IV die aufeinander schwimmend angeordneten plattenartigen Schutzschichten des Schutzsystems der Jacke, wobei die breiteste plattenartige Schutzschicht der Wirbelsäule bzw. dem Oberkörper zugewandt ist;
Fig. 5 zeigt in einer weiteren Ausführungsvariante den schichtweisen Aufbau des geschnitten dargestellten Schutzsystems der Jacke mit zwei Schutzschichten aus Polypropylen und vier Schutzschichten aus Polyethylen;
Fig. 6 zeigt in einer anderen Ausführungsvariante den schichtweisen Aufbau des geschnitten dargestellten Schutzsystems der Jacke, wobei wechselweise angeordnete Schutzschichten aus Polyethylen und Polypropylen vorhanden sind;
Fig. 7 zeigt in einer Schnittdarstellung entlang der Schnittlinie IV-IV den Schichtaufbau des Schutzsystems, wobei eine aus mehreren, mit verschiedenen Eigenschaften ausgestalteten Materialien gebildete Hülle das Schutzsystem umhüllt;
Fig. 8 zeigt einen anderen Aufbau des erfindungsgemässen Schutzsystems ohne dargestellte Hülle, wobei das System in Pfeilrichtung an den Rücken angelegt wird;
Fig. 9 zeigt einen weiteren Aufbau des erfindungsgemässen Schutzsystems ohne dargestellte Hülle, wobei zwei aussenliegende elastische Schichten und eine innenliegende harte, steife Schicht vorhanden sind und wobei die dem Rücken zugewandte Schicht eine Ausnehmung aufweist.

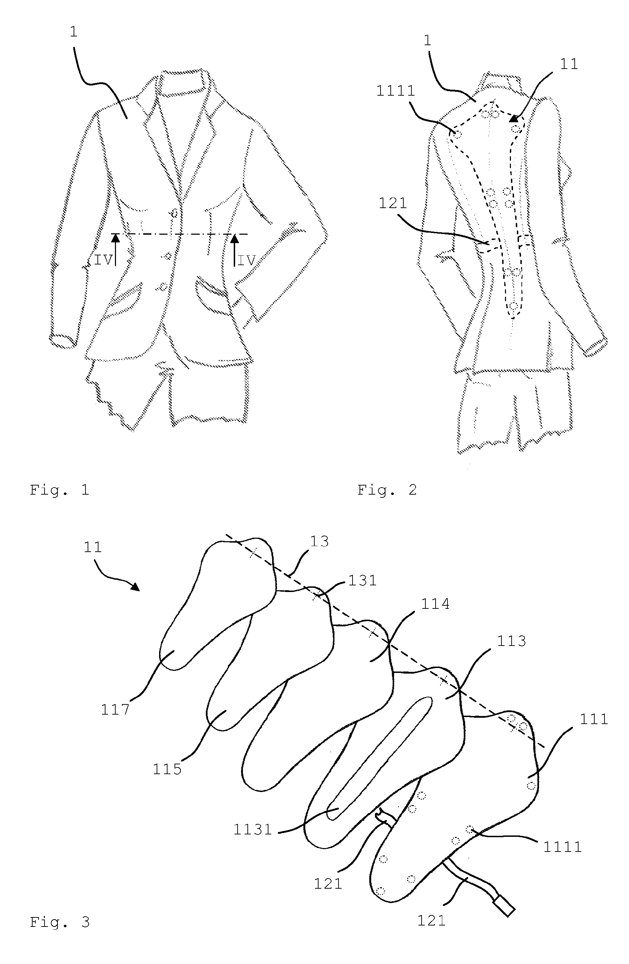

Figur 1 illustriert eine erfindungsgemässe Jacke 1 in einer Vorderansicht, wobei eine strichpunktierte Linie die Schnittlinie IV-IV darstellt. Die Jacke 1 bzw. das Kleidungsstück ist vorliegend als für den Reitsport vorgesehenen Blazer ausgebildet und weist eine für den Reitsport geeignete Schnittform auf, so dass nötige Bewegungsfreiheit beim Reiten gewährleistet ist. Das zwischen Rücken und Jacke 1 angeordnete und aus Figur 2 ersichtliche erfindungsgemässe Schutzsystem ist von ausserhalb visuell kaum wahrnehmbar. Funktional schützt das Schutzsystem die Reiterin wirksam bei möglichen Sturzverletzungen am Rücken und der Wirbelsäule, bspw. beim Sturz von einem Pferd, etwa beim Überspringen von Hindernissen.

Figur 2 illustriert die Jacke 1 in einer Ansicht von hinten bzw. einem leicht seitlich abgedrehten Oberkörper, wobei das mittels eines Gurts 121 im Bereich der Taille und mittels Befestigungsmitteln 1111 an der Jacke befestigten Schutzsystems 11 zwischen Jacke 1 und Oberkörper in gestrichelter Linie dargestellt ist. Aus Figur 2 ist ersichtlich, dass das Schutzsystem 11 ergonomisch dem Rücken angepasst ist. Dies wird dadurch erreicht, dass die plattenartigen Schutzschichten 111,112,... in einem Tiefziehverfahren unter Erhitzung bei ca. 150° Celsius während ungefähr 2 bis 7 Minuten durch thermoplastische Verformung formgepresst werden. Das Schutzsystem ist dadurch angenehm zwischen Jacke 1 und Oberkörper angeformt. Befestigungsmittel 15 sind bspw. als Druckknöpfe ausgebildet, wobei mehrere Knöpfe entlang des Umfangs des Schutzsystems angeordnet sind. Das eine Element eines Knopfs am Schutzsystem wird dabei mit einem entsprechenden an der Jacke angeformten Gegenelement verbunden.

Figur 3 illustriert eine vereinfachte Explosionsdarstellung mehrerer Schutzschichten 111,112, ... des Schutzsystems 11 der erfindungsgemässen Jacke 1, wobei rechts unten die Schutzschicht dargestellt ist, welche im befestigten Zustand dem Rücken bzw. Wirbelsäule 21 zugewandt ist.

Die einzelnen Schutzschichten sind aus Polypropylen, Polyethylen oder aus einem silikonartigen Material gebildet. Vorzugsweise sind vier Schichten 111,113,115,117 oder Lagen aus Polyethylen vorgesehen. Diese Schichten weisen dämpfende oder abfedernde Eigenschaften auf.

Die mindestens eine Schicht 114 aus Polypropylen ist vorzugsweise hart ausgebildet und verteilt eine einwirkende Kraft im Falle eines Sturzes auf eine möglichst grosse Fläche. Die Schutzschicht 114 dient zudem der Versteifung des Schutzsystems 11. Dabei wirken die verschiedenen Schutzschichten optimal zusammen, indem die einwirkende Kraft verteilt und abgefedert wird, wodurch das Verletzungsrisiko für die Wirbelsäule minimiert wird. Die Schutzschichten 111,112,... sind vorzugsweise in einem Sandwich-Aufbau zusammengefügt. Das Schutzsystem weist typischerweise eine annähernd deltoide Form ("Drachenviereck") auf, so dass auch der Schulterbereich vom Schutzsystem erfasst ist.

Die Linie 13 veranschaulicht, wie die Schichten an vorgegebenen Fixationspunkten 131 mindestens punktuell miteinander, vorzugsweise dauerhaft, verbunden sind. Dies kann durch Verklebung oder Vernietung erfolgen. In den übrigen Bereichen der Schichten 111,112,... können diese zueinander mindestens teilweise verschiebbar gelagert sein, so dass die Bewegungsfreiheit beim Reiten oder Gehen erhalten bleibt. Die dem Rücken zugewandte Schutzschicht 111 weist vorzugsweise die grösste Grundfläche aller Schutzschichten auf.

Die der Jacke zugewandte Schutzschicht 117 weist üblicherweise die geringste Grundfläche auf. Für verschiedene Konfektionsgrössen S, M, L etc. können verschiedene Kombinationen von sich einander abwechselnden Schutzschichten eingesetzt werden. Für kleinere Konfektionsgrössen bzw. Personen mit geringerem Körpergewicht ist bspw. ein Schutzsystem mit fünf Schutzschichten ausreichend. Für grössere Konfektionsgrössen oder grosses Körpergewicht des Reiters kann ein Schutzsystem mit sieben Schutzschichten realisiert werden. Die Schutzschichten sind einfach vorfabrizierbar und lagerbar.

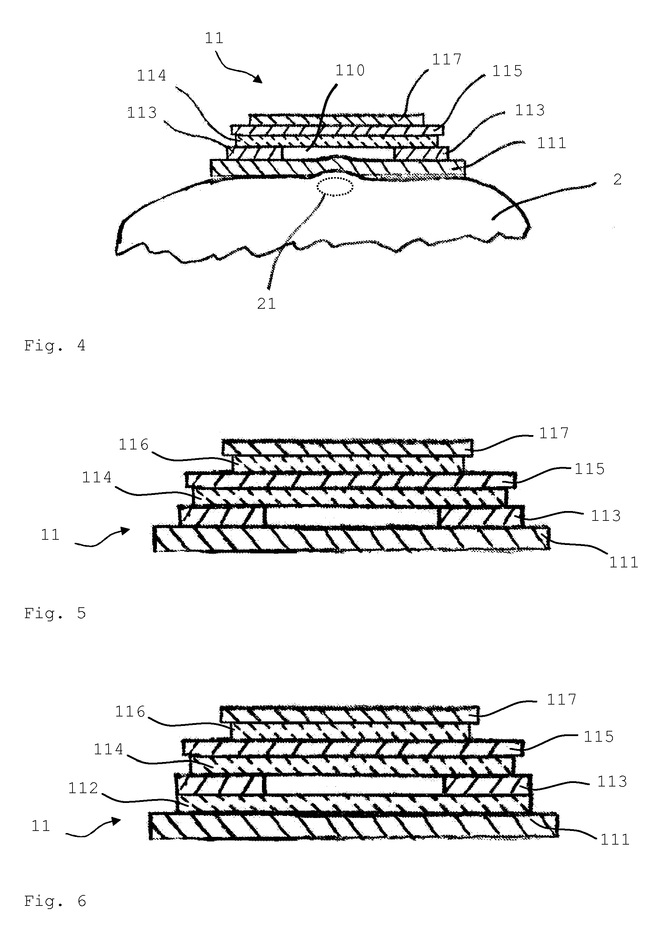

Figur 4 illustriert in einer Schnittdarstellung entlang der Schnittlinie IV-IV die aufeinander schwimmend angeordneten plattenartigen Schutzschichten des Schutzsystems 11 der Jacke 1, wobei die breiteste plattenartige Schutzschicht der Wirbelsäule 21 bzw. dem Oberkörper 2 zugewandt ist. Die Schutzschicht 113 weist eine längliche Ausnehmung auf, so dass sich beim Aufeinanderschichten zwischen den Schutzschichten ein Hohlraum 110 bildet. Durch diesen Hohlraum wird gewährleistet, dass sich das Schutzsystem 11 an die Wirbelknochen der Wirbelsäule 21 anformt, was den Tragkomfort erhöht. Als letzte und der Wirbelsäule 21 entfernteste Schutzschicht 117 kann eine Schicht aus Polyurethan oder Silikon mit einer Materialstärke von 2 bis 6 mm eingesetzt werden. Dadurch wird die Federwirkung des Schutzsystems 11 zusätzlich erhöht.

Figur 5 illustriert in einer weiteren Ausführungsvariante den schichtweisen Aufbau des geschnitten dargestellten Schutzsystems 11 der Jacke 1 mit zwei Schutzschichten 114,116 aus Polypropylen (PP) und vier Schutzschichten 111,113,115,117 aus Polyethylen (PE).

Figur 6 illustriert in einer anderen Ausführungsvariante den schicht- oder lageweisen Aufbau des geschnitten dargestellten Schutzsystems 11 der Jacke 1, wobei wechselweise angeordnete Schutzschichten 111,113,115,117 aus Polyethylen (PE) und Schutzschichten 112,114,116 aus Polypropylen (PP) vorhanden sind.

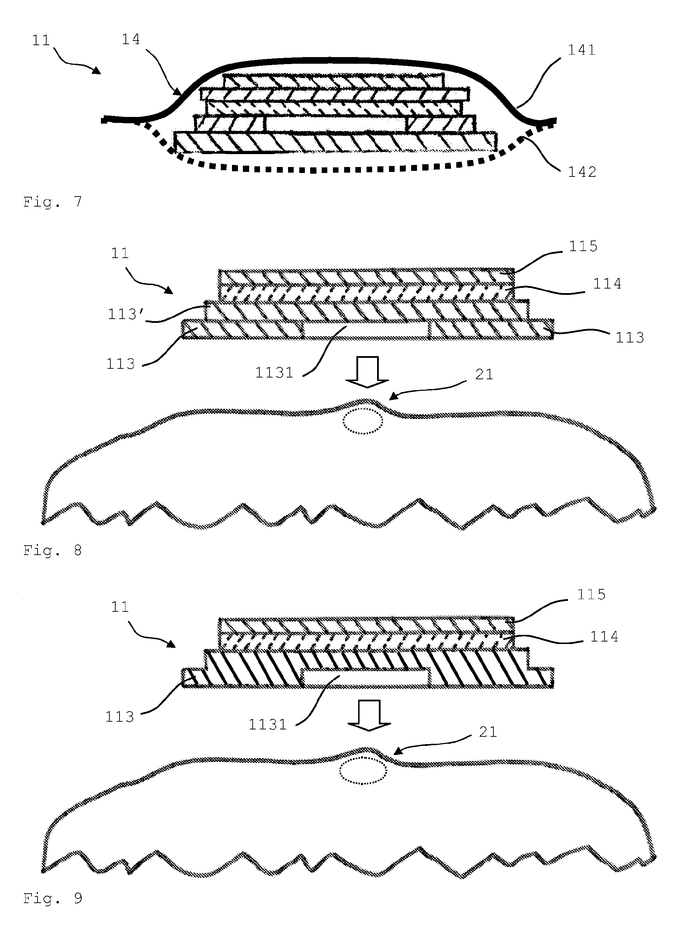

Figur 7 illustriert in einer Schnittdarstellung entlang der Schnittlinie IV-IV den Schichtaufbau des Schutzsystems 11, wobei eine aus mehreren, mit verschiedenen Eigenschaften ausgestalteten Materialien 141,142 gebildete Hülle 14 das Schutzsystem umhüllt. Das dem Rücken der Reiterin zugewandte Material 142 ist bspw. ein Netzstoff, welcher feuchtigkeitsdurchlässig ist, so dass das Material durchlässig für Schweiss ist. Als aussenliegende Hülle 141 wird vorzugsweise ein feuchtigkeitsabweisendes Material verwendet, bspw. Polychloropren.

Figur 8 illustriert einen anderen Aufbau des erfindungsgemässen Schutzsystems 11 ohne dargestellte Hülle, wobei das System 11 in Pfeilrichtung an den Rücken angelegt wird.

Figur 9 zeigt einen weiteren Aufbau des erfindungsgemässen Schutzsystems ohne dargestellte Hülle, wobei zwei aussenliegende elastische Schichten 113,113',115 und eine innenliegende harte, steife Schicht 114 vorhanden sind. Die dem Rücken bzw. der Wirbelsäule 21 zugewandte Schicht 113,113' weist eine Ausnehmung auf. Deren Breite liegt vorzugsweise zwischen 2 bis 5 cm, bevorzugt zwischen 2,5 bis 4 cm und besonders bevorzugt zwischen 2,5 bis 3,5 cm. Die Ausnehmung oder Vertiefung 1131 hat eine Tiefe von vorzugsweise 1 bis 5 mm, besonders bevorzugt eine Tiefe von 2 bis 4 mm. Vorliegend ist eine Tiefe von 3 mm vorgesehen. Die Ausnehmung kann bspw. spanabhebend in einem mechanischen Verfahren oder durch Entfernung von Material mittels eines chemischen Verfahrens gefertigt werden.

Die verwendeten Materialstärken der Materialien bzw. Stoffe, liegen im Bereich von 0,5 bis 5 mm. Das bzw. jedes verwendeten Hüllmaterial der Hülle wird entlang des Schnittrands vorzugsweise genäht oder verklebt. Die Enden des Gurtsystems 121, welches in Figur 3 ersichtlich ist, werden vorzugsweise mit der Hülle 14 ebenfalls vernäht oder verklebt. Die Hülle verbessert den Tragekomfort. Dadurch passt sich das Schutzsystem 11 der Jacke 1 den Bewegungen beim Reiten an. Das Gurtsystem 121 stabilisiert das Schutzsystem 11 in der vorgesehenen Schutzposition am Rücken.

### Bezugszeichenlegende

- 1: Jacke, Kleidungsstück
- 11: Schutzsystem, Protektor, Rückenprotektor
- 110: Hohlraum
- 111 ... 117: Schutzschicht
- 1111: Befestigungsmittel, Druckknopf
- 1131: längliche Ausnehmung
- 121: Gurtsystem
- 13: Achse
- 131: Fixationspunkt, Fixationsbereich
- 14: Hülle, Aussenhülle, Schutzhülle
- 141: innenliegende Hülle
- 142: aussenliegende Hülle

- 2: Oberkörper, Torso
- 21: Wirbelsäule

## Patentansprüche

1. Schutzsystem (11) zum Schutz der Wirbelsäule, welches aus mehreren Lagen von Schutzschichten (111,112,...) gebildet ist und welches Befestigungsmittel (1111) zum wiederentfernbaren Verbinden des Schutzsystems (11) mit einem Kleidungsstück (1) umfasst, **dadurch gekennzeichnet,**
**dass** das Schutzsystem (11) mindestens zwei elastisch ausgebildete Schutzschichten (111,113) umfasst,
**dass** das Schutzsystem (11) eine harte, steife Schutzschicht (114) umfasst, welche zwischen den elastischen Schutzschichten (111,113) angeordnet und mit diesen dauerhaft verbunden ist,
**dass** die der Wirbelsäule zugewandte elastische Schutzschicht (111) eine Ausnehmung aufweist, so dass das Schutzsystem (11) optimal an Rücken und Wirbelsäule anpassbar ist.

2. Schutzsystem (11) gemäss Anspruch 1, **dadurch gekennzeichnet, dass** die Schutzschichten (111,112,...) durch thermoplastische Verformung einer der Wirbelsäule entsprechende Form geformt sind.

3. Schutzsystem (11) gemäss einem der Ansprüche 1 oder 2, **dadurch gekennzeichnet, dass** dieses aus mindestens zwei, bevorzugterweise vier aus Polyethylen gebildeten Schutzschichten (111,113,115,117) besteht.

4. Schutzsystem (11) gemäss einem der Ansprüche 1 bis 3, **dadurch gekennzeichnet, dass** mindestens zwischen zwei elastischen Schutzschichten eine aus Polypropylen gebildete harte, steife Schutzschicht (112,114,116) angeordnet ist.

5. Schutzsystem (11) gemäss einem der Ansprüche 1 bis 4, **dadurch gekennzeichnet, dass** dieses von einer Hülle (14) umgeben ist, welche mit der Oberfläche des Schutzsystems (11) dauerhaft verbunden ist.

6. Schutzsystem (11) gemäss Anspruch 5, **dadurch gekennzeichnet, dass** der Bereich der Hülle (14), welcher der Wirbelsäule zugewandt ist, aus mindestens teilweise feuchtigkeitsdurchlässigem Material besteht.

7. Schutzsystem (11) gemäss einem der Ansprüche 5 oder 6, **dadurch gekennzeichnet, dass** der Bereich der Hülle (14), welcher dem Kleidungsstück (1) zugewandt ist, aus mindestens teilweise feuchtigkeitsabweisendem Material besteht.

8. Schutzsystem (11) gemäss einem der Ansprüche 1 bis 7, **dadurch gekennzeichnet, dass** dieses eine mindestens annähernd deltoide Fläche aufweist.

9. Jacke (1) mit einem Schutzsystem (11) zum Schutz der Wirbelsäule, **dadurch gekennzeichnet, dass** das Schutzsystem (11) aus mindestens einer plattenartigen Schutzschicht (111,112,...) besteht und dass dem Schutzsystem (11) Befestigungsmittel (15) angeformt sind, mittels welchen das Schutzsystem (11) wiederentfernbar mit der Jacke (1) verbunden ist.

10. Jacke (1) gemäss Anspruch 9, **dadurch gekennzeichnet, dass** das Schutzsystem aus mehreren Schutzschichten (111,112,...) mehrlagig ausgebildet ist.

11. Jacke (1) gemäss einem der Ansprüche 9 oder 10, **dadurch gekennzeichnet, dass** die Schutzschichten aus Polyethylen und Polypropylen bestehen.

12. Jacke (1) gemäss einem der Ansprüche 9 bis 11, **dadurch gekennzeichnet, dass** das Schutzsystem (1) aus mindestens zwei, bevorzugterweise vier aus Polyethylen gebildeten Schutzschichten (111,113,115,117) besteht, wobei mindestens zwischen zwei derartigen Schutzschichten eine Schutzschicht aus Polypropylen (112,114,116) angeordnet ist.

13. Jacke (1) gemäss einem der Ansprüche 9 bis 12, **dadurch gekennzeichnet, dass** die bzw. jede aus Polyethylen gebildete Schutzschicht eine Materialstärke im Bereich von 1 bis 5 mm aufweist,

14. Jacke (1) gemäss einem der Ansprüche 9 bis 13, **dadurch gekennzeichnet, dass** die bzw. jede aus Polypropylen gebildete Schutzschicht eine Materialstärke im Bereich von 0.2 bis 1 mm aufweist.

15. Jacke (1) gemäss einem der Ansprüche 9 bis 14, **dadurch gekennzeichnet, dass** eine das Schutzsystem (11) mindestens teilweise umhüllende Hülle (14) umfasst, wobei die Hülle (14) mindestens teilweise aus feuchtigkeitsabweisendem Polychloropren gebildet ist und eine Materialstärke im Bereich von 0.5 bis 5 mm aufweist.

16. Jacke (1) gemäss Anspruch 15, **dadurch gekennzeichnet, dass** die Hülle (14) des Schutzsystems (11) mindestens teilweise aus einem für Feuchtigkeit durchlässigen Netzstoff gebildet ist und der Netzstoff eine Materialstärke im Bereich von 0.5 bis 5 mm aufweist.

17. Jacke (1) gemäss einem der Ansprüche 9 bis 16, **dadurch gekennzeichnet, dass** die plattenartigen Schutzschichten (111,112,...) mindestens an einem Fixationspunkt (131) miteinander fixiert sind, bspw. durch punktuelle Verklebung, so dass die Schutzschichten zueinander verschiebbar sind.

18. Jacke (1) gemäss einem der Ansprüche 9 bis 17, **dadurch gekennzeichnet, dass** dem Schutzsystem (11) ein Gurtsystem angeformt ist, mittels welchem das Schutzsystem bspw. am Oberkörper (2) befestigbar ist.

19. Jacke (1) gemäss einem der Ansprüche 9 bis 18, **dadurch gekennzeichnet, dass** mindestens eine der Schutzschichten des Schutzsystems (11) eine längliche Ausnehmung (1131) aufweist, so dass sich das Schutzsystem optimal an die Wirbelsäule anpasst.

20. Verfahren zur Herstellung eines Schutzsystem (11) zum Schutz der Wirbelsäule, **dadurch gekennzeichnet, dass** mindestens zwei elastische, vorzugsweise aus geschäumtem Polyethylen gebildete Schichten (113,115) mit einer zwischen diesen angeordneten, vorzugsweise aus Polypropylen gebildeten harten Schicht (114) dauerhaft verbunden werden, wobei die Schichten durch thermoplastische Verformung in eine der Wirbelsäule entsprechenden Form geformt werden.

21. Verfahren gemäss Anspruch 20, **dadurch gekennzeichnet, dass** die Schutzschichten (111,...) in einem Tiefziehverfahren unter Erhitzung bei ca. 150° Celsius während vorzugsweise 2 bis 7 Minuten durch thermoplastische Verformung geformt werden.
